# EUROPEAN PATENT APPLICATION

(11) **EP 4 395 116 A1**
(43) Date of publication of application: **03.07.2024**
(21) Application number: 22861007.7
(22) Date of filing: 13.07.2022
(51) Int. Cl.: H02J 7/02, H01M 10/44, H01M 10/48

(54) **ACTIVE BALANCER**

(30) Priority: 26.08.2021 JP 2021137879
(71) Applicant: Imasen Electric Industrial Co., Ltd., Inuyama-shi, Aichi 484-8507 (JP)
(72) Inventor: YAMANOUE, Koichi, Inuyama-shi, Aichi 484-8507 (JP); TAKAHASHI, Masayoshi, Inuyama-shi, Aichi 484-8507 (JP); MAKIO, Daisuke, Inuyama-shi, Aichi 484-8507 (JP)
(74) Representative: Office Freylinger
(86) International application number: PCT/JP2022/027503
(87) International publication number: WO 2023/026716

(57) **Abstract**

Provided is an active balancer achieving reductions in size and price. An active balancer 1 of the present invention equalizes the voltages of a plurality of cells 11, 12. The active balancer 1 is provided with a capacitor 2 and an inductance 3 arranged between the cells 11, 12, and is further provided with: a plurality of switching elements Q1, Q2, Q3, Q4 for switching connection states between the plurality of cells 11, 12; and detection circuits M1, M2, M3, M4 for detecting the voltages of the switching elements Q1, Q2, Q3, Q4 The detection circuits M1, M2, M3, M4 detect voltage resonance and current resonance of the switching elements Q1, Q2, Q3, Q4.

## Description

### TECHNICAL FIELD

The present invention relates to an active balancer. In particular, the present invention relates to an active balancer that is connected to a battery module that includes a plurality of cells that are connected in series, in order to control charging and discharging.

### BACKGROUND ART

Battery modules in which a plurality of cells are connected in series are commonly used as secondary batteries for supplying electric power at a high voltage. In such battery modules, unevenness in the state of charge occurs due to repeated charging and recharging. Unevenness in the state of charge reduces the effective capacity of the battery module as a whole, and leads to deterioration of individual cells due to overcharging and overdischarging. Therefore, there is a need for a balancing control device, in other words a balancer, that controls charging and discharging of each cell and equalizes the state of charge among the cells. Balancers include active balancers and passive balancers, and in recent years, active balancers, which discharge cells with a high voltage to regeneratively charge cells with a low voltage, are commonly used.

An active balancer is provided with a plurality of switching elements for switching the direction of the electric power that is supplied to the cells. A known method for efficiently turning switching elements on and off is soft switching. The soft switching method includes a LC resonant circuit consisting of an inductance element and a capacitor for determining the timing of the switching. The active balancer controls the electric current or the voltage to a sine wave shape by using the LC resonant circuit, and switches the switching elements on and off in a state in which either of the voltage and the electric current that flow through the respective switching elements is approximately 0. This makes it possible to reduce switching loss and noise. Patent Document 1 discloses an electric power storage apparatus that reduces the load on cells when equalizing the voltage on the cells the electric power storage apparatus including: a serial resonant circuit that includes a reactor and a capacitor; and an electric power storage control device that controls the connection status between the cells and the serial resonant circuit, wherein the electric power storage control device controls the serial resonant circuit to share the energy among the cells.

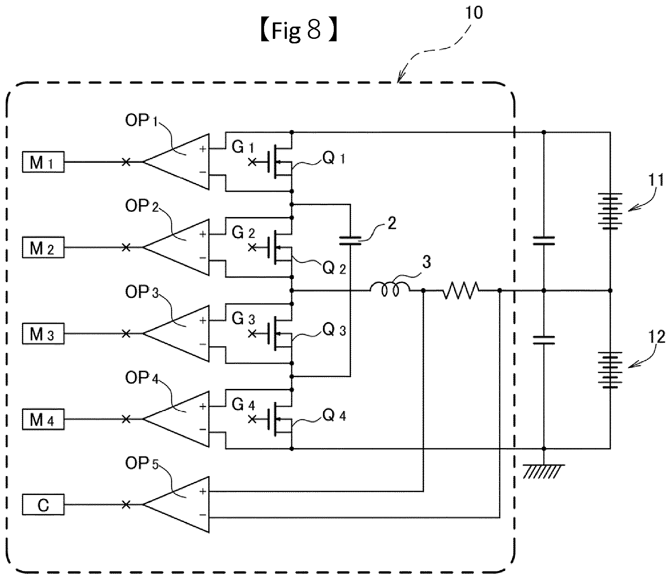

Fig. 8 illustrates a circuit diagram that illustrates a circuit structure for a conventional active balancer that equalizes the state of charge of two cells. In the conventional active balancer 10, in order to detect the resonance of the voltage and the electric current in the LC resonant circuit, there is a need for four voltage detection circuits denoted by numerals M1, M2, M3, and M4 and one electric current detection circuit denoted by numeral C, for one active balancer.

### RELATED ART DOCUMENTS

### PATENT DOCUMENTS

Patent Document 1: Japanese Unexamined Patent Application Publication No. 2015-65795

### DISCLOSURE OF THE INVENTION

### PROBLEMS TO BE SOLVED BY THE INVENTION

In recent years, there is a demand for further reduction of size and manufacturing costs of active balancers. Therefore, there is also a demand for reduction in size and simplification of the electric current detection circuits and voltage detection circuits for detecting resonance in the circuits of the active balancer.

The present invention was made in view of the above problem to be solved, and addresses the problem of providing a novel resonant circuit configuration for an active balancer, whereby a reduction in size and cost of the active balancer as a whole can be realized.

### MEANS FOR SOLVING THE PROBLEMS

The invention according to claim 1 relates to an active balancer that equalizes the voltages of a plurality of cells that are connected in series. The active balancer of the present invention is provided with: a capacitor and an inductance that are arranged between the cells; a plurality of switching elements that switch connection states between the plurality of cells; and detection circuits that detect the voltages of the switching elements. The active balancer of the present invention is characterized in that the detection circuits detect a voltage resonance and an electric current resonance of the switching elements.

In the active balancer of the present invention, it is preferable that two switching elements are arranged in parallel with respect to one cell, that one detection circuit is provided for each switching element, and that the voltage resonance and the electric current resonance of the switching elements are detected by detecting the electric current and the voltage of the switching elements.

### EFFECTS OF THE INVENTION

The active balancer according to the present invention allows for a simplified configuration of the detection circuit than in the conventional art, by having the detection circuits detect both the voltage resonance and the electric current resonance of the switching elements. As a result, it is possible to provide an active balancer that is reduced in size at a lower cost.

### BRIEF DESCRIPTION OF THE DRAWINGS

Fig. 1 is a circuit diagram that illustrates an overview of a basic circuit structure of an active balancer according to an embodiment of the present invention;
Fig. 2 illustrates with arrows the path that an electric current flows through the active balancer of the present invention when the active balancer charges a cell on the upper side of the drawing from a cell on the lower side of the drawing;
Fig. 3 illustrates with arrows the path that an electric current flows through the active balancer of the present invention when the active balancer charges a cell on the lower side of the drawing from a cell on the upper side of the drawing;
Fig. 4 illustrates with arrows the path that an electric current flows through the active balancer of the present invention when the active balancer charges a cell on the lower side of the drawing from a cell on the upper side of the drawing;
Fig. 5 illustrates with arrows the path that an electric current flows through the active balancer of the present invention when the active balancer charges a cell on the lower side of the drawing from a cell on the upper side of the drawing;
Fig. 6 illustrates an example of voltage waveforms and electric current waveforms that are detected by detection circuits of the active balancer of the present invention;
Fig. 7 illustrates an example of voltage waveforms and electric current waveforms that are detected by detection circuits of the active balancer of the present invention; and
Fig. 8 is a circuit diagram that illustrates a basic circuit structure of a conventional active balancer.

### MODE FOR CARRYING OUT THE INVENTION

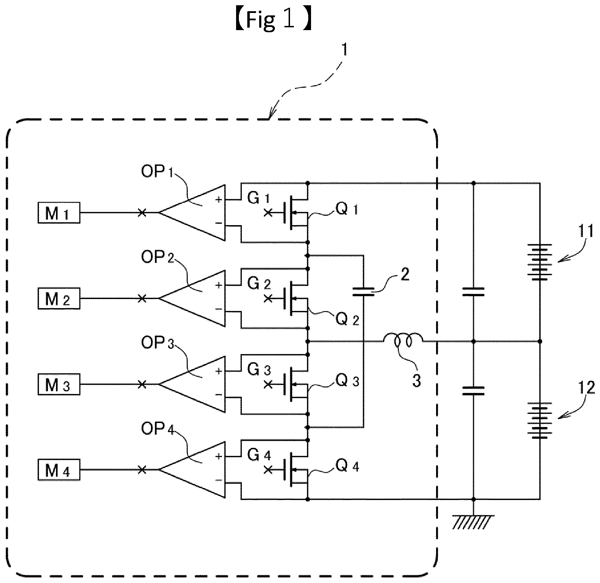

A preferred embodiment of an active balancer 1 of the present invention is described below with reference to the drawings. Fig. 1 illustrates an overview of a circuit structure of the active balancer 1 of the present invention when controlling charging and discharging of two cells 11 and 12 that are connected in series.

The active balancer 1 according to the present embodiment includes a capacitor 2 and an inductance 3 that are arranged between the cells 11 and 12, a plurality of switching elements Q₁, Q₂, Q₃, and Q₄ that switch the connection states between the cells 11 and 12, and detection circuits M₁, M₂, M₃, and M₄ that detect the electric current and the voltage of the switching elements.

In the present embodiment, the cells 11 and 12 for which the active balancer 1 controls the charging and discharging consist of a positive electrode, a negative electrode, and an electrolyte that is filled between the electrodes, and are secondary batteries that can be repeatedly charged and discharged. In the present invention, an arrangement of two or more batteries connected in series and having a positive electrode terminal and a negative electrode terminal at the end portions thereof is also referred to as a cell. Supplying of electric power to an external load may be performed from the terminals of the cell. In the present embodiment, a lithium-ion battery, a lithium-ion capacitor, or an electrolytic double layer capacitor may be favorably used as the cells 11 and 12.

The active balancer 1 according to the present embodiment performs control such that electric power of one of the cells 11 and 12 that has the greater state of charge is temporarily stored in the capacitor and then redistributed to the other cell that has the smaller state of charge. The switching elements Q₁, Q₂, Q₃, and Q₄ constitute a half-bridge circuit that performs switching. The capacitor that temporarily stores the electric power of the cell is connected to the cells 11 and 12 via the half-bridge circuit.

In general, transistors are used as the switching elements Q₁, Q₂, Q₃, and Q₄. In the present embodiment, the most preferably used switching element is a MOSFET.

The capacitor 2 and the inductance 3 constitute a LC series circuit. In this circuit structure, voltage resonance and electric current resonance occur, where the electric current and the voltage each change in the form of a sine function, and a timing occurs when the either one of the electric current and the voltage becomes zero.

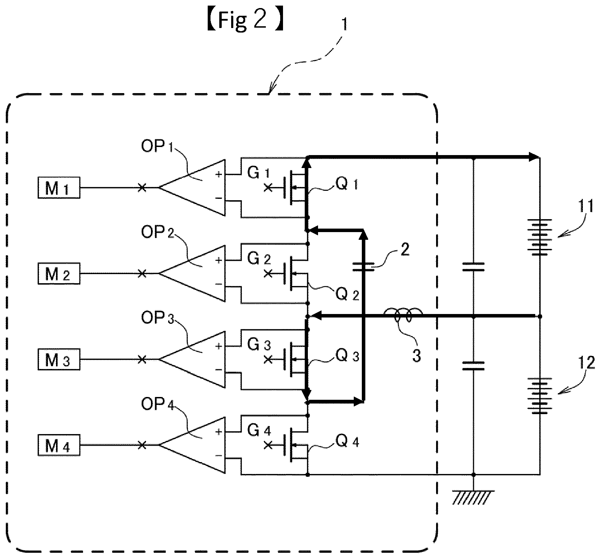

Fig. 2 illustrates with thick arrows an example of the path that an electric current flows through the active balancer 1 of the present embodiment when the active balancer 1 charges the cell 11 from the cell 12. When charging is done from the cell 12 to the cell 11 along the path illustrated in Fig. 2, the switching element Q1 and the switching element Q3 are turned on, and the switching element Q2 and the switching element Q4 are turned off.

When the electric current flows in the direction illustrated in Fig. 2, the electric current value that flows through the inductance 3 and the electric current value that flows through the switching elements are equal. By considering the switching elements as shunt resistances and providing one detection circuit with functionality to detect both electric current and voltage, the number of circuits can be reduced.

When the switching elements Q₁, Q₂, Q₃, and Q₄ are switched on or off when the electric current and the voltage are not zero, a great electric power loss occurs. By switching the switching elements Q₁, Q₂, Q₃, and Q₄ on and off respectively at a timing when either of the electric current and the voltage is zero, that is to say at a zero cross detection timing, the active balancer 1 is able to greatly reduce switching loss.

The detection circuits M₁, M₂, M₃, and M₄, which correspond one-to-one with the switching elements Q₁, Q₂, Q₃, and Q₄, are used in order to detect the on and off switching timing. Op amps (operational amplifiers) OP₁, OP₂, OP₃, and OP₄ are connected in parallel with the respective switching elements Q₁, Q₂, Q₃, and Q₄, and the detection circuits M₁, M₂, M₃, and M₄ are connected to the output terminals of the op amps.

The detection circuit M₁ detects the voltage between the source and the drain of the switching element Q₁. The detection circuit M₂ detects the electric current between the source and the drain of the switching element Q₂. The detection circuit M₂ may also detect the voltage between the source and the drain of the switching element Q₂. The detection circuit M₃ detects the electric current between the source and the drain of the switching element Q₃. The detection circuit M₃ may also detect the voltage between the source and the drain of the switching element Q₃. The detection circuit M4 detects the voltage between the source and the drain of the switching element Q₄.

Particularly, the detection accuracy of the detection circuits M₂ and M₃, which detect the electric current, may be improved by providing operational amplifiers such as op amps.

On the basis of the detected results of the detection circuits, the timing at which to switch the switching elements on and off is determined, and respective gate voltages G₁, G₂, G₃, and G₄ of the switching elements Q₁, Q₂, Q₃, and Q₄ are controlled by an unillustrated control means.

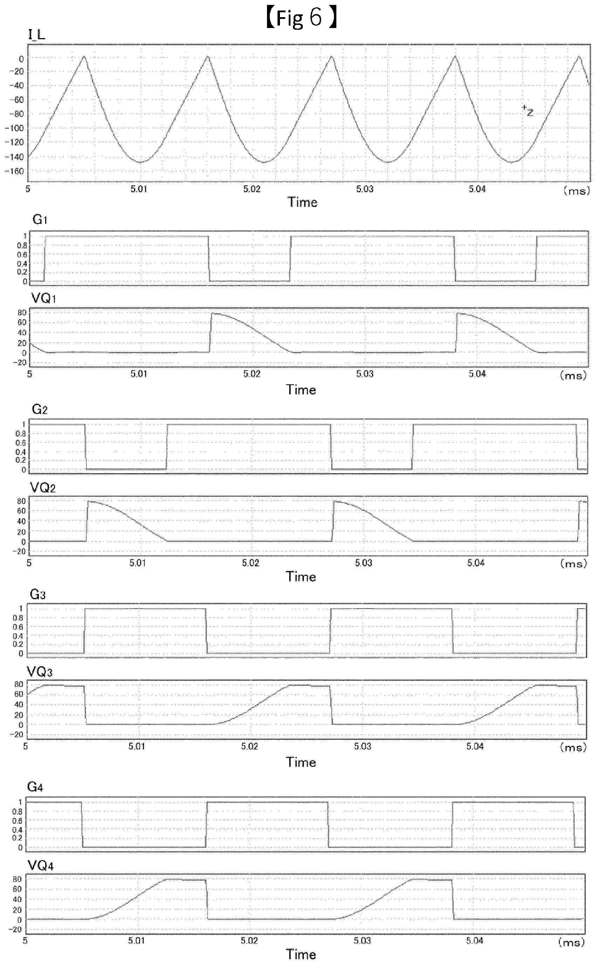

Fig. 6 illustrates an example of voltage waveforms and electric current waveforms that are detected by the detection circuits M₁, M₂, M₃, and M₄ when the active balancer 1 according to the present embodiment charges the cell 11 from the cell 12, and control results of the gate voltages for the switching that is performed in accordance with the detected results.

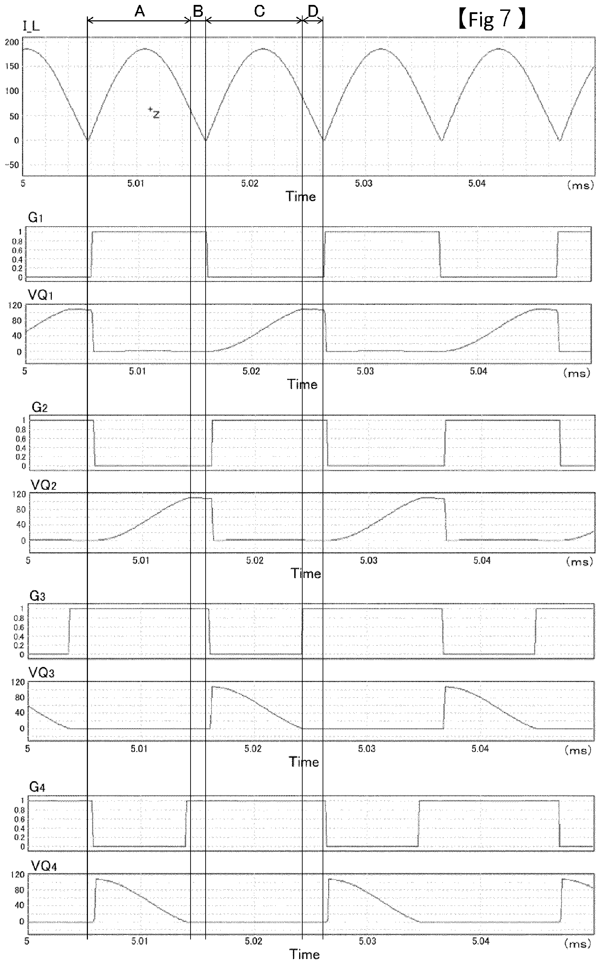

Fig. 7 illustrates an example of voltage waveforms and electric current waveforms that are detected by the detection circuits M₁, M₂, M₃, and M₄ when the active balancer 1 according to the present embodiment charges the cell 12 from the cell 11, and control results of the gate voltages for the switching that is performed in accordance with the detected results.

In Fig. 6 and Fig. 7, I_L indicates changes over time of the electric current that flows through the coil 3, which is the inductance, detected by the detection circuit M₂. G₁ indicates the waveform over time of the gate voltage G₁ that the control circuit applies to the switching element Q₁. VQ₁ indicates changes over time of the voltage between the source and the drain of the switching element Q₁ measured by the detection circuit M₁. G₂ indicates the waveform over time of the gate voltage G₂ that the control circuit applies to the switching element Q₂. VQ₂ indicates changes over time of the voltage between the source and the drain of the switching element Q₁ measured by the detection circuit M₂. G₃ indicates the waveform over time of the gate voltage G₃ that the control circuit applies to the switching element Q₃. VQ₃ indicates changes over time of the voltage between the source and the drain of the switching element Q₃ measured by the detection circuit M₃. G₄ indicates the waveform over time of the gate voltage G₄ that the control circuit applies to the switching element Q₄. VQ₄ indicates changes over time of the voltage between the source and the drain of the switching element Q₄ measured by the detection circuit M₄.

As illustrated in Fig. 6, in the control of the active balancer 1 when charging the cell 11 from the cell 12, the gate voltage G₁ of the switching element Q₁ is switched on or off at a timing when the voltage between the source and the drain of the switching element Q₁ becomes zero, or a timing when the electric current of the coil 3 becomes zero. The gate voltage G₂ of the switching element Q₂ is switched on or off at a timing when the voltage between the source and the drain of the switching element Q₂ becomes zero, or a timing when the electric current becomes zero. The gate voltage G₃ of the switching element Q₃ is switched on or off at a timing when the voltage between the source and the drain of the switching element Q₃ becomes zero, or a timing when the electric current becomes zero. The gate voltage G₄ of the switching element Q₄ is switched on or off such that a timing thereof is opposite to the on or off timing of the switching element Q₃. Turning on the switching element Q₃ and the switching element Q₄ at the same time only results in energy being stored in the coil 3 from the lower cell 12, and thus LC resonance does not occur.

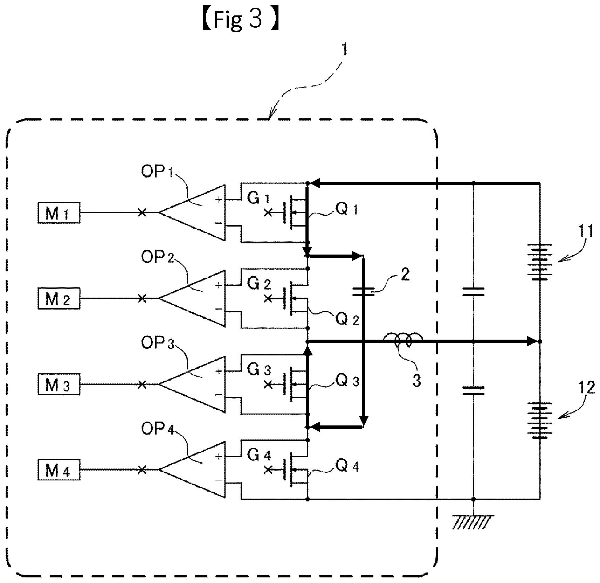

Referring to Figs. 3-5 and 7, control of the active balancer 1 when charging the cell 12 from the cell 11 will be described below. Figs. 3-5 illustrate with thick arrows the path that the electric current flows through the active balancer 1 according to the present embodiment when the active balancer 1 charges the cell 12 from the cell 11. When the active balancer 1 charges the cell 12 from the cell 11, the path of the electric current is charged in the three ways illustrated in Figs. 3-5 by controlling the on and off states of the switching elements.

The timing for switching the switching elements, similarly to when the cell 11 is charged from the cell 12, is when the voltages between the sources and the drains of the switching elements become zero, or when the electric current of the coil 3 becomes zero. When the electric current flows in the direction illustrated in Figs. 3-5, the electric current value that flows through the inductance 3 and the electric current value that flows through the switching elements are also equal. By considering the switching elements as shunt resistances and providing an electric current detection circuit, both electric current and voltage can be detected by one detection circuit.

A duration A, denoted by the numeral A in Fig. 7, begins at the timing when the electric current of the coil 3 becomes zero and resumes until the timing when the voltage between the source and the drain of the switching element Q₄ becomes zero. During the duration A, the active balancer 1 controls the switching elements Q₁ and Q₃ to be on, and the switching elements Q₂ and Q₄ to be off. The path of the electric current that flows through the active balancer 1 during the duration A is illustrated in Fig. 3.

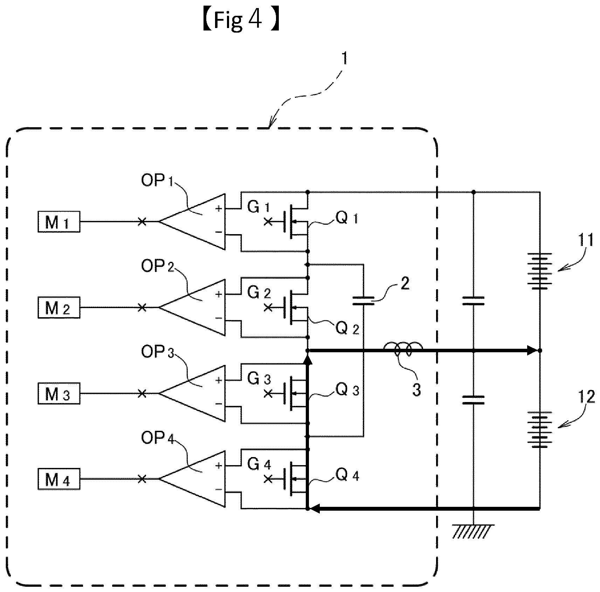

A duration B, which follows the duration A in Fig. 7, resumes until a timing when the electric current of the coil 3 becomes zero. During the duration B, the active balancer 1 controls the switching elements Q₁, Q₃, and Q₄ to be on, and the switching element Q₂ to be off. The path of the electric current that flows through the active balancer 1 during the duration B is illustrated in Fig. 4.

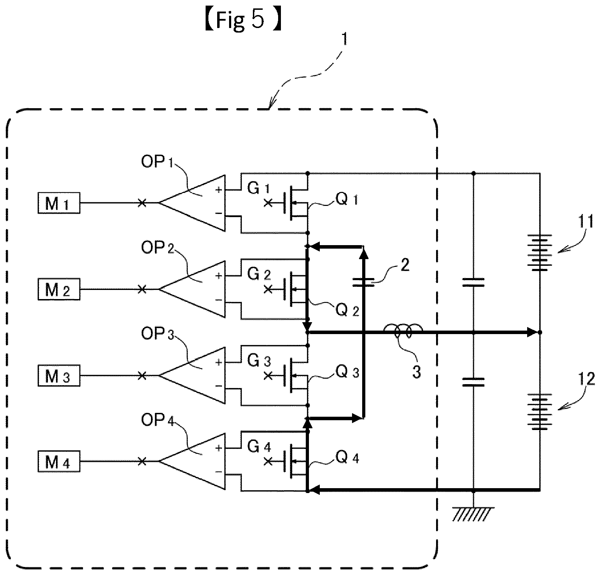

A duration C, which follows the duration B in Fig. 7, resumes until a timing when the voltage between the source and the drain of the switching element Q₄ becomes zero. During the duration C, the active balancer 1 controls the switching elements Q₂ and Q₄ to be on, and the switching elements Q₁ and Q₃ to be off. The path of the electric current that flows through the active balancer 1 during the duration C is illustrated in Fig. 5.

A duration D, which follows the duration C in Fig. 7, resumes until a timing when the electric current of the coil 3 becomes zero again. During the duration D, similarly to the duration B, the active balancer 1 controls the switching elements Q₁, Q₃, and Q₄ to be on, and the switching element Q₂ to be off. The path of the electric current that flows through the active balancer 1 during the duration D is the path that is illustrated in Fig. 4, which is identical to the path during the duration B.

As described in detail above, when the active balancer according to the present embodiment controls the charging and discharging of, for example, two cells that are connected in series, the active balancer is able to perform efficient switching control that reduces electric power loss during switching, by being provided with circuits that correspond one-to-one with the switching elements and detect both electric current and voltage. Compared with a conventional active balancer as illustrated in Fig. 8, switching can be sufficiently controlled by a smaller number of detection circuits even when controlling the charging and discharging of the same two cells, and it is possible to achieve a reduction in size and price of the active balancer.

The active balancer according to the present invention is applicable when equalizing the voltages of a greater number of cells. For example, when equalizing the voltages of four cells, equalization of the voltages during repeated charging and discharging can be similarly performed by adopting a multi-layered hierarchic structure in which three active balancers are used.

### INDUSTRIAL APPLICABILITY

In addition to various vehicles in which secondary batteries are used, the active balancer according to the present invention can be favorably installed in any industrial machine.

### DESCRIPTION OF THE REFERENCE NUMERAL

1, 10 Active balancer
2 Capacitor
3 Inductance (coil)
11, 12 Cell
Q₁, Q₂, Q₃, and Q₄ Switching elements
M₁, M₂, M₃, and M₄ Detection circuits
OP₁, OP₂, OP₃, and OP₄ Op amps

## Claims

1. An active balancer that equalizes voltages of a plurality of cells that are connected in series, the active balancer comprising:
a capacitor and an inductance that are arranged between the plurality of cells;
a plurality of switching elements that switch connection states between the plurality of cells; and
detection circuits that detect the voltages of the switching elements,
**characterized in that** the detection circuits detect voltage resonance and electric current resonance of the switching elements.

2. The active balancer according to claim 1, wherein two of the switching elements are arranged in parallel with respect to one of the cells, and one detection circuit is provided with respect to each of the switching elements, **characterized in that** the voltage resonance and the electric current resonance of the switching elements are detected by detecting the electric currents and the voltages of the switching elements.
